(19) Europäisches Patentamt
European Patent Office
Office européen des brevets

(11) **EP 1 231 609 B1**

(12) **FASCICULE DE BREVET EUROPEEN**

(45) Date de publication et mention
de la délivrance du brevet:
**16.07.2008 Bulletin 2008/29**

(51) Int Cl.:
*G21F 9/28* (2006.01)     *C23F 1/40* (2006.01)
*C01G 55/00* (2006.01)

(21) Numéro de dépôt: **02290283.7**

(22) Date de dépôt: **06.02.2002**

(54) **Procédé de dissolution et de decontamination**

Verfahren zum Auflösen und Dekontaminieren

Process for dissolution and decontamination

(84) Etats contractants désignés:
**AT BE CH CY DE DK ES FI FR GB GR IE IT LI LU MC NL PT SE TR**

(30) Priorité: **08.02.2001 FR 0101704**

(43) Date de publication de la demande:
**14.08.2002 Bulletin 2002/33**

(73) Titulaire: **COMMISSARIAT A L'ENERGIE ATOMIQUE**
**75015 Paris (FR)**

(72) Inventeurs:
• **Fulconis, Jean-Michel**
**30150 Roquemaure (FR)**
• **Delagrange, Jacques**
**30130 Saint Paulet de Caisson (FR)**

• **Dalard, Francis**
**38240 Meylan (FR)**

(74) Mandataire: **Audier, Philippe André**
**Brevatome**
**3, rue du Docteur Lancereaux**
**75008 Paris (FR)**

(56) Documents cités:
**EP-A- 0 247 933         US-A- 5 248 496**

• **DATABASE WPI Section Ch, Week 198846 Derwent Publications Ltd., London, GB; Class K07, AN 1988-327938 XP002181487 & JP 63 243232 A (ISHIKAWAJIMA HARIMA JUKOGYO KK), 11 octobre 1988 (1988-10-11)**

## Description

### Domaine technique

La présente invention se rapporte à un procédé de dissolution de dépôts de ruthénium présents sur une surface, ainsi qu'à un procédé de décontamination de circuits internes d'une usine de retraitement de combustibles nucléaires utilisant ledit procédé de dissolution.

La présente invention concerne donc notamment la décontamination de circuits internes d'usines de retraitement de combustibles nucléaires irradiés. Le procédé de la présente invention permet d'extraire des canalisations et des appareils de telles usines des dépôts composés en partie de ruthénium.

Le ruthénium radioactif, c'est à dire les isotopes $^{106}$Ru et $^{103}$Ru, ou stable fait partie des produits de fission présents dans le combustible nucléaire après irradiation en réacteur. De manière générale pour un combustible irradié à 34 000 mégawatts/jour la teneur en ruthénium est de l'ordre de 0,2% de la masse d'uranium initial.

Lors des étapes de retraitement des combustibles irradiés, la grande majorité de ce ruthénium se retrouve dans les circuits et appareils des usines de retraitement sous diverses formes chimiques. Certaines espèces sont solubles dans le milieu d'attaque du combustible généralement utilisé, c'est à dire l'acide nitrique. Ces espèces sont par exemple les complexes de ruthénium nitrosyle nitro nitraté $RuNO(NO_3)_3(H_2O)_2$. D'autres espèces sont particulièrement insolubles dans ce milieu telles que les oxydes de ruthénium $RuO_2$ et $RuO_2.x(H_2O)_{2<x<3}$ ou bien encore le ruthénium métallique. La fraction de ruthénium insoluble représente en général entre 25 et 90% selon le type de combustible.

Selon leur genèse et leur nature chimique, ces espèces insolubles se retrouvent en divers lieux des usines de retraitement tels que dans les circuits de dissolution en tête de procédé, au niveau du premier cycle d'extraction ou des circuits de concentration et de stockage des produits de fission.

En terme d'assainissement des usines de retraitement, le traitement du ruthénium est important pour deux raisons essentielles :

- du fait de son activité spécifique, le ruthénium actif déposé représente une part importante de l'activité résiduelle et l'entraînement de ce ruthénium constitue un moyen privilégié de réduction du débit de dose des installations avant leur démantèlement ;

- le ruthénium précipite en entraînant des radioéléments, tels que U ou Pu par exemple. Ces dépôts irradiants recouvrent les parois métalliques et limitent de ce fait l'efficacité des séquences de décapage des parois métalliques qui représentent les phases ultimes d'assainissement.

L'élimination de ces divers dépôts de ruthénium constitue donc une étape incontournable dans l'assainissement d'une usine de retraitement du combustible irradié.

### Etat de la technique antérieure

La demande de brevet EP-A- 0 247 933 décrit un procédé de décontamination de matériaux solides contaminés par des éléments radioactifs tels que le ruthénium. Dans ce procédé, la pièce à décontaminer est d'abord mise en contact avec une solution décontaminante de soude à 8 mol.l⁻¹ et de $K_2S_2O_8$ à 25 g.l⁻¹ puis rincée avec une solution d'acide sulfurique à 0,5 mol.l⁻¹.

Cette méthode est efficace mais elle présente deux inconvénients majeurs :

- elle utilise une solution fortement sodique à environ 184 g.l⁻¹ de sodium, ce qui engendre un nombre de verres important pour traiter les effluents générés, et
- elle utilise des sulfates, ce qui est pénalisant en terme d'exutoire et peut poser des problèmes de corrosion en milieu acide sur certaines nuances d'acier tels que les aciers austénitiques.

D'autres oxydants en milieu alcalin ont été envisagés tels que le $Mn^{VII}$ sous forme de $KMnO_4$, mais des phénomènes de précipitation de $Mn^{II}$ réduit conduisent à piéger une partie du Ru dans des boues radioactives difficiles à traiter.

Les procédés d'oxydation en milieu acide présentent l'inconvénient de donner lieu à une forte volatilisation du ruthénium sous forme de tétraoxyde de ruthénium $RuO_4$ ce qui aboutit à une contamination aérienne des installations par polymérisation réductrice sous forme de $(RuO_2)x.(RuO_4)y.zH_2O$. Ce phénomène est également rencontré lors du traitement des effluents contenant du ruthénium par évaporation en milieu nitrique ou de la dissolution des combustibles usagés. En outre, les procédés oxydants en milieu acide présentent l'inconvénient d'être plus délicats en terme de résistance à la corrosion des installations en acier austénitique présentant un domaine de passivation assez étroit.

Le procédé JP-A-63 243232 présente un procédé de décontamination des pièces contaminées en Ru par mise en contact avec un flux gazeux d'ozone, formation de $RuO_4$ volatil, piégeage du $RuO_4$ sur un adsorbant spécifique et réduction du ruthénium piégé sous forme de Ru métal. L'utilisation de l'ozone comme agent oxydant permet de maintenir le ruthénium sous forme volatile, c'est à dire qu'il n'y a pas de phénomènes de polymérisation sur les parties aériennes métalliques, jusqu'au réacteur de récupération.

Ce procédé ne peut pas être mis en oeuvre dans le cas de l'assainissement d'une usine de retraitement pour plusieurs raisons :

- la décontamination se fait à haute température or, il n'est pas possible de chauffer, sauf investissements lourds, l'ensemble des circuits à décontaminer,
- ce procédé implique de créer un réacteur de piégeage du ruthénium, ce qui constitue une modification d'installation délicate,
- ce procédé implique une unité de récupération du Ru qu'il faudrait créer de toute pièce pour le projet d'assainissement.

L'oxydation du ruthénium par l'ozone en phase liquide est par ailleurs utilisée pour la purification et la récupération du ruthénium des catalyseurs et des électrodes.

Le document US-A-5 248 496 décrit un moyen de volatilisation du ruthénium sous forme de $RuO_4$ par formation successive de ruthénate, perruthénate puis tétraoxyde à pH voisin de 8 à une température comprise entre 80 et 100°C.

Le document JP-A-10 273327 décrit un moyen de synthèse de $RuO_4$ par réaction d'espèces ruthéniées, Ru métal, trihalide, sulfate, oxyde ou sous forme de complexes solubles, par l'ozone dans l'eau à pH inférieur ou égal à 7 et à une température comprise idéalement entre 5 et 50°C.

Dans ces deux procédés, le passage par une forme gazeuse permet de purifier le ruthénium en vue de sa réutilisation. Ce sont donc des conditions de volatilisation maximale qui sont recherchées.

Cet objectif n'est pas recherché dans le cas de l'assainissement d'usines de retraitement. En effet, dans ces usines, il est nécessaire de solubiliser le ruthénium dans une solution décontaminante avant d'envoyer ladite solution aux exutoires pour une vitrification.

La présente invention a précisément pour but de fournir un procédé répondant à cet objectif et palliant les inconvénients précités.

## Exposé de l'invention

Pour atteindre cet objectif, la présente invention fournit un procédé de dissolution de dépôts de ruthénium présents sur une surface comprenant une mise en contact de ladite surface avec une solution aqueuse de perruthénate, ladite solution aqueuse ayant un pH supérieur ou égal à 12.

Les dépôts de ruthénium sont par exemple du ruthénium métal ou des oxydes de ruthénium tels que les oxydes de ruthénium $RuO_2$ et $RuO_2 \cdot x(H_2O)_{2<x<3}$.

La réaction mise en jeu peut s'écrire sous la forme schématique :

$$Ru_{solide} + RuO_4^-{}_{aq} \rightarrow 2\ RuO_4^{2-}{}_{aq}$$

avec $Ru_{solide}$, le ruthénium constituant le dépôt à dissoudre, $RuO_4^-{}_{aq}$, le perruthénate de la solution aqueuse basique utilisé pour dissoudre les dépôts de ruthénium selon la présente invention, et $RuO_4^{2-}{}_{aq}$ le ruthénium qui a été dissous dans la solution aqueuse sous sa forme ruthénate.

Le perruthénate est l'oxydant du couple perruthénate/ruthénate :

$$RUO_4^{2-}/\ RuO_4^{2-}\ E^0 = 0,593\ V/ENH\ à\ pH=14$$

Dans le procédé de la présente invention, ce couple redox présente les avantages suivants :

- son potentiel d'oxydation est assez élevé pour oxyder les dépôts de ruthénium visés dans le procédé de la présente invention,
- il est soluble sous sa forme oxydée et sous sa forme réduite, ceci évite les phénomènes de précipitation tels que ceux rencontrés dans l'art antérieur avec le couple $MnO_4^-/MnO_2$.

Selon un mode particulier de réalisation de la présente invention, le perruthénate peut être régénéré in situ par injection, dans la solution aqueuse en contact avec ladite surface, d'un agent de régénération gazeux.

L'agent de régénération gazeux peut être par exemple de l'ozone, un mélange d'air et d'ozone, d'azote et d'ozone ou d'oxygène et d'ozone.

L'ozone peut être produit à partir d'un générateur à décharge dans lequel on fait circuler soit de l'air industriel, soit de l'azote et de l'oxygène pur.

La réaction chimique de régénération des perruthénates à partir des ruthénates par l'ozone peut être écrite comme suit :

$$2\ RuO_4{}^{2-}{}_{aq}\ +\ O_3\ +\ H_2O\ \rightarrow\ 2\ RuO_4{}^-{}_{aq}\ +\ O_2\ +\ 2\ OH^-$$

Dans le procédé de la présente invention, lorsqu'il est présent, l'ozone joue un double rôle d'agent de régénération des perruthénates et d'oxydation directe du dépôt.

En effet, du fait de son potentiel redox élevé en milieu basique, 1,246 V/ENH à 25°C et pH = 14, il oxyde la majorité des espèces inorganiques. Ainsi, en solution, il oxyde les espèces ruthéniées formant les dépôts de ruthénium directement selon la réaction :

$$Ru_{solide}\ +\ 7/3\ O_3\ +\ H_2O\ \rightarrow\ RuO_4{}^{2-}{}_{aqu}\ +\ O_2\ +\ 2\ OH^-$$

Le procédé de la présente invention peut donc permettre une régénération continue des perruthénates à partir des ruthénates formés par la dissolution des dépôts de ruthénium, et éventuellement le passage en solution d'une partie de l'ozone qui peut agir directement sur les dépôts de ruthénium.

L'agent de régénération peut être injecté dans la solution de dissolution des dépôts de ruthénium à partir de n'importe quel point d'injection déjà existant dans une installation de retraitement de combustibles irradiés, tel qu'un air-lift tel qu'un air-lift de transfert et/ou de brassage, une canne ou rampe de bullage, etc.... Idéalement, selon l'invention, la solubilisation la plus complète de cet agent, par exemple de l'ozone, en phase aqueuse sera recherchée.

L'injection de l'agent de régénération gazeux, selon le procédé de la présente invention, permet avantageusement un renouvellement continu de l'interface liquide/solide entre la solution basique de dissolution des dépôts de ruthénium et la surface à traiter, favorisant les réactions de dissolution des espèces insolubles, c'est à dire desdits dépôts.

Selon l'invention, la mise en contact est de préférence effectuée pendant une durée suffisante pour dissoudre la totalité des dépôts de ruthénium. Cette durée est donc notamment fonction de la concentration en perruthénate de la solution aqueuse basique utilisée, et de la quantité de dépôt de ruthénium à dissoudre. L'homme du métier saura adapter cette durée en fonction de ces paramètres et des exigences industrielles telles que le temps imparti pour une telle opération.

Pour la mise en contact, selon un mode de mise en oeuvre de la présente invention, la solution aqueuse peut être avantageusement mise en circulation au contact de la surface comportant le dépôt de ruthénium à dissoudre afin de faciliter les échanges entre la solution et les dépôts à dissoudre. Par exemple lorsqu'il s'agit de la surface interne d'un conduit, la solution peut être mise en circulation à l'intérieur du conduit.

Lorsque les réactions de l'ozone avec le ruthénate ou les contaminants produisent de l'oxygène, celui-ci peut être directement évacué dans des circuits d'évents existant par exemple dans les installations de retraitement des combustibles.

Selon l'invention, la solution aqueuse est une solution aqueuse basique contenant un sel de ruthénium à la valence VII, le perruthénate $RuO_4{}^-$. Selon l'invention, cette solution aqueuse peut avoir une concentration C en mol.l$^{-1}$ de perruthénate, avec $0 < C \leq 0,1$, par exemple d'environ $10^{-4}$ mol.l$^{-1}$.

Le pH $\geq$12 permet d'obtenir les ruthénates et perruthénates, et d'éviter ou de limiter la formation du tétraoxyde de ruthénium du fait de la réaction de réduction de celui-ci par les ions hydroxydes présents en solution selon la réaction suivante :

$$2\ RuO_4\ +\ 2\ OH^-\ \rightarrow\ 2\ RuO_4{}^-\ +\ H_2O\ +\ \tfrac{1}{2}\ O_2$$

Par ailleurs, dans le cas où de l'ozone est utilisé pour régénérer le perruthénate, la concentration en OH$^-$ ne doit pas être trop élevée de manière à limiter la consommation d'ozone par les OH$^-$, réaction qui transforme l'ozone moléculaire dissout en espèces radicalaires inefficaces.

Ainsi, selon l'invention, la solution aqueuse basique a de préférence une concentration en ions OH⁻ allant de 0,01 à 6 mol.l⁻¹, de préférence de 0,03 à 0,6 mol.l⁻¹, par exemple de 0,5 mol.l⁻¹.

La solution aqueuse peut être rendue basique par exemple par de l'hydroxyde de sodium.

Selon l'invention, la mise en contact peut être effectuée à une température allant de 5 à 50°C, par exemple à la température ambiante, par exemple à une température de 15 à 30°C. Une température supérieure diminue la solubilité de l'ozone et augmente la vitesse de consommation de l'ozone moléculaire par réaction avec les OH⁻.

Dans le mode particulier de réalisation du procédé de la présente invention, lorsque de l'ozone est injecté dans la solution aqueuse de dissolution, il peut provoquer la volatilisation d'une partie du ruthénium. Ceci n'est pas pénalisant dans le procédé de la présente invention car l'ozone excédentaire, qui peut représenter environ 50% de l'ozone injecté, maintient le $RuO_4$ formé sous forme gazeuse.

Selon la présente invention, les gaz tels que de l'ozone excédentaire et le $RuO_4$ sortant de la solution aqueuse lors du procédé de dissolution, peuvent être récupérés par lavage au moyen d'une solution de lavage de ces gaz.

Selon l'invention, la solution de lavage des gaz peut être une solution aqueuse comprenant de 0,01 à 10 mol.l⁻¹ d'ions OH⁻, par exemple de 0,5 à 2 mol.l⁻¹, par exemple une solution de soude. La concentration de la soude peut être par exemple d'environ 1 mol.l⁻¹. La soude joue le double rôle de destruction de l'ozone excédentaire par formation d'espèces radicalaires qui se décomposent instantanément en oxygène, et de récupération du ruthénium sous forme de mélange soluble ruthénate/perruthénate.

Le lavage des gaz peut être effectué à une température allant de 0 à 100°C, de préférence à la température ambiante, par exemple à une température de 15 à 30°C.

Le procédé de la présente invention consiste en somme en une décontamination par dissolution oxydante des différentes espèces ruthéniées présentes sur une surface, par exemple dans les circuits et appareils d'une usine de retraitement de combustibles nucléaires irradiés.

La présente invention se rapporte donc également à un procédé de décontamination d'une usine de retraitement de combustibles nucléaires irradiés mettant en oeuvre le procédé de dissolution de la présente invention.

Outre les avantages précités, le coût du traitement de l'effluent de dissolution issu du procédé de la présente invention est réduit du fait de la régénération de l'agent d'oxydation.

De plus, les risques de corrosion des aciers austénitiques de certaines installations par l'ozone en milieu basique sont très réduits. En effet, le domaine de passivation des aciers austénitiques en milieu basique est très entendu, compris entre 0,200 et 1,400 V/ENH, ce qui limite les risques de corrosion quand il est nécessaire d'avoir un potentiel d'environ 0,6 V/ENH pour obtenir des ruthénates et perruthénates en milieu basique.

D'autres avantages apparaîtrons encore à la lecture de la description qui suit, des exemples illustratifs et non limitatifs suivants, et des figures annexées.

## Brève description des dessins

- La figure 1 est une représentation schématique des différentes réactions chimiques qui peuvent être mises en jeu dans le procédé de la présente invention,
- La figure 2 est une représentation schématique d'un dispositif de mise en oeuvre du procédé de la présente invention, et
- La figure 3 est une représentation graphique de l'évolution de la concentration en espèces ruthéniées en fonction du temps dans une solution de perruthénate selon le procédé de la présente invention.

## Description détaillée de modes de réalisation

Exemple 1 : Vitesse de dissolution d'un dépôt de ruthénium en fonction de la concentration en perruthénate d'une solution aqueuse de perruthénate selon le procédé de la présente invention.

Le tableau 1 ci-dessous illustre la dépendance de la vitesse de dissolution d'un dépôt de ruthénium par rapport à la teneur en ruthénates en présentant le temps nécessaire à la dissolution d'un dépôt de 0,2 g de dioxyde de ruthénium hydraté par un débit d'ozone gazeux de 4,2 g.h⁻¹ dans de la soude 0,5 molaire. Le volume du réacteur était de 3 litres. Chacune des réaction à été réalisée dans des conditions hydrodynamiques similaires et à 20°C.

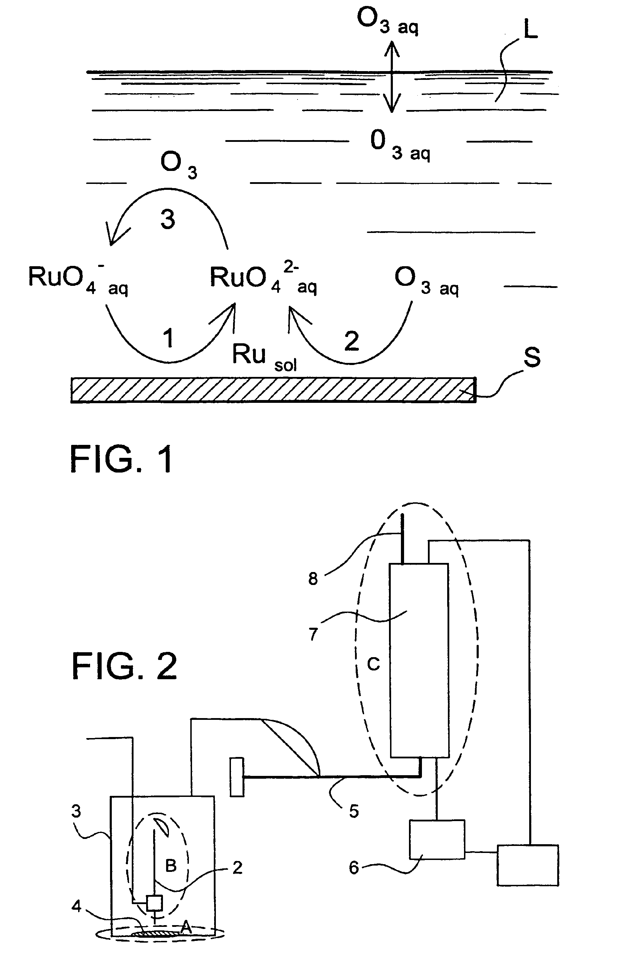

Les réactions chimiques mises en jeu sont schématisées sur la figure 1. Sur cette figure : S = surface sur laquelle se trouve le dépôt de ruthénium et L = solution aqueuse basique.

Tableau 1

| Evolution de la vitesse de décontamination en fonction de la teneur initiale en ruthénate | |
|---|---|
| Concentration en ruthénate/mol.l$^{-1}$ | Temps de réaction/min |
| 0 | 12 |
| 10$^{-4}$ | 6 |
| 10$^{-3}$ | 2 |

Au cours de la réaction de dissolution des dépôts de ruthénium, le ruthénium oxydé se solubilise sous forme de ruthénate puis de perruthénate, la réaction est donc autocatalytique.

Exemple 2 : procédé de la présente invention en l'absence et en présence d'un agent de régénération gazeux

Le tableau 2 présente le potentiel à l'abandon d'une solution aqueuse de soude en présence ou en absence de barbotage de gaz : oxygène ou oxygène ozoné.

Tableau 2

| Potentiel oxydant des solutions de soude en présence d'ozone | |
|---|---|
| Milieu | Potentiel (mV/ENH) |
| Soude 1 mol.l$^{-1}$ | 60 |
| Soude 1 mol.l$^{-1}$ + $O_2$ | 110 |
| Soude 1 mol.l$^{-1}$ + $O_2/O_3$ | 220 |

Le tableau 2 illustre le fait que l'introduction d'ozone dans la solution augmente considérablement le pouvoir oxydant de celle-ci et rend possible les réactions d'oxydation des différentes espèces ruthéniées à solubiliser.
Le tableau 3 montre l'évolution du potentiel oxydant d'une solution de soude en présence d'ozone selon la concentration en soude.

Tableau 3

| Evolution du potentiel en fonction de la teneur en soude | |
|---|---|
| Teneur en soude (mol.l$^{-1}$) | Potentiel (mV/ENH) |
| 1 | 220 |
| 0,5 | 300 |
| 0,1 | 500 |

Le pouvoir oxydant de la solution augmente donc lorsqu'on diminue la concentration en soude.
Le tableau 4 illustre l'effet de l'abaissement de la teneur en soude sur le temps nécessaire à la dissolution de 0,2 g de dioxyde de ruthénium hydraté avec un débit d'ozone gazeux de 4,2 g.h$^{-1}$ à température ambiante (T=20°C) pour des conditions hydrodynamiques similaires.

Tableau 4

| Evolution de la vitesse de réaction en fonction de la teneur en soude | |
|---|---|
| Teneur en soude (mol.l$^{-1}$) | Temps de réaction (min) |
| 1 | 20 |
| 0,5 | 11 |
| 0,25 | 13 |

L'abaissement de la teneur en soude diminue donc le temps de dissolution du ruthénium hydraté jusqu'à un seuil pour une concentration voisine de 0,5 mole par litre de solution.

Exemple 3 : Effet de la température sur le procédé de la présente invention

Le tableau 5 illustre la diminution de la teneur en ozone moléculaire en solution en fonction de la température dans une solution [NaOH] = 1 mol.l$^{-1}$.

Tableau 5

| Evolution du potentiel d'oxydation en fonction de la température | |
|---|---|
| Température/°C | Potentiel/mV |
| 25 | 300 |
| 40 | 200 |

Le tableau 6 illustre l'indépendance de la vitesse de réaction par rapport à la température entre 20 et 40°C en présentant le temps nécessaire à la dissolution d'un dépôt de 0,2 g de dioxyde de ruthénium hydraté avec un débit d'ozone gazeux de 4,2 g.h$^{-1}$ dans de la soude 0,5 molaire et des conditions hydrodynamiques similaires.

Tableau 6

| Evolution de la vitesse de décontamination en fonction de la température | |
|---|---|
| Température/°C | Temps de réaction/min |
| 20 | 11 |
| 40 | 12 |

Exemple 4 : dispositif pour la mise en oeuvre du procédé de la présente invention

Du fait de l'utilisation du procédé de la présente invention tel que décrit ci-dessus, de la présence d'air-lifts dans les cuves à décontaminer et d'une colonne de lavage des gaz équipant les circuits d'évents dans les usines de retraitement de combustibles irradiés, le dispositif est schématisé sur la figure 2 annexée.
Il comprend une cuve 3 munie d'un système d'injection de gaz 2, par exemple un air-lift. La cuve est contaminée par un dépôt 4 contenant du ruthénium.
La cuve est remplie avec une solution aqueuse rendue basique par de l'hydroxyde de sodium, à une concentration de 0,3 mol.l$^{-1}$ auquel on a ajouté du ruthénate de sodium, à une concentration de 100 mg/l$^{-1}$.
La cuve est brassée par l'intermédiaire de l'air-lift en alimentant le circuit gaz 1 de l'air-lift 2 par un mélange gazeux contenant de l'ozone et au moins un gaz choisi parmi l'azote et l'oxygène.
Les zones réactionnelles impliquées dans la décontamination sont :

la zone A dans laquelle le dépôt recouvre la cuve, et dans laquelle se déroule principalement l'oxydation par les perruthénates formés dans l'air-lift 2, et
la zone B dans l'air-lift 2 où se déroule l'oxydation directe par l'ozone des particules solides entraînées par le brassage et l'oxydation des ruthénates en perruthénates.

Parallèlement, une fraction volatilisée de ruthénium est entraînée vers un circuit de traitement des gaz 5 équipé d'un contacteur gaz/liquide 7 constitué d'une colonne de lavage des gaz, dans laquelle une solution de lavage basique 6 d'hydroxyde de sodium, à une concentration de 1 mol.l$^{-1}$ est mise en contact avec la phase gazeuse avant le départ de celle-ci vers le circuit d'évent 8. La zone réactionnelle impliquée dans cette étape est la zone C correspondant à la colonne de lavage des gaz dans laquelle se déroule la destruction de l'ozone excédentaire et la solubilisation du $RuO_4$ par réduction par la soude sous forme de perruthénates.

Exemple 5 : Procédé de l'invention avec une solution aqueuse de perruthénate et de soude en l'absence d'agent de régénération

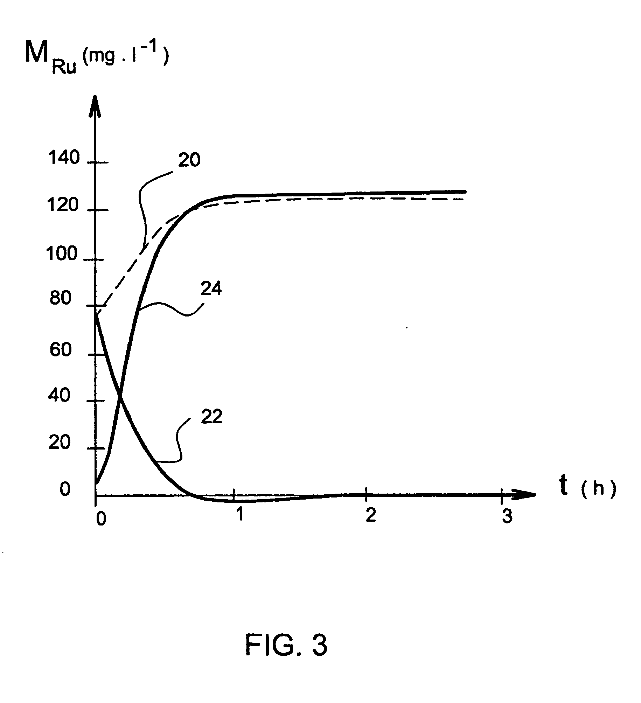

La figure 3 illustre l'évolution de la composition de la solution de décontamination durant la dissolution de 50 mg de ruthénium insoluble sous forme de dioxyde de ruthénium hydraté par mise en contact avec une solution aqueuse de soude 0,1 mol.l$^{-1}$ contenant des perruthénates en solution à raison de 75 mg/l de Ru sous forme de perruthénates à 25°C en l'absence d'agent de régénération des perruthénates.

Durant cette expérience, le volume de solution de décontamination qui était de 1 litre était constamment agité.

Sur cette figure, la référence 20 indique l'évolution de la concentration en Ru total dans la solution de décontamination (mg.l$^{-1}$), la référence 22 indique l'évolution de la concentration en perruthénate dans la solution de décontamination (mg.l$^{-1}$), et la référence 24 indique l'évolution de la concentration en ruthénate dans la solution de décontamination (mg.l$^{-1}$), le tout en fonction du temps en heure.

Cette figure montre qu'au cours de la réaction, la concentration en perruthénate diminue du fait de l'absence d'agent de régénération, parallèlement la concentration en ruthénate augmente de même que la concentration en ruthénium en solution. Ces courbes illustrent également le fait que la réaction de dissolution du dépôt de ruthénium par le perruthénate est très rapide et au bout de deux heures la quasi-totalité du dépôt est solubilisé.

## Revendications

1. Procédé de dissolution de dépôts de ruthénium présents sur une surface comprenant une mise en contact de ladite surface avec une solution aqueuse de perruthénate, ladite solution aqueuse ayant un pH supérieur ou égal à 12.

2. Procédé selon la revendication 1, dans lequel ladite solution aqueuse a une concentration C en mol.l$^{-1}$ de perruthénate, avec $0 < C \leq 0,1$.

3. Procédé selon la revendication 1, dans lequel ladite solution aqueuse a une concentration C de perruthénate de $10^{-4}$ mol.l$^{-1}$.

4. Procédé selon la revendication 1 ou 2, dans laquelle la solution aqueuse a une concentration en ions OH$^{-}$ allant de 0,01 à 6 mol.l$^{-1}$ .

5. Procédé selon la revendication 1 ou 2, dans laquelle la solution aqueuse a une concentration en ions OH$^{-}$ de 0,03 à 0,6 mol.l$^{-1}$.

6. Procédé selon la revendication 1 ou 2, dans lequel la mise en contact est effectuée à une température allant de 5 à 50°C.

7. Procédé selon la revendication 1, dans lequel le perruthénate régénéré in situ par injection, dans la solution aqueuse en contact avec ladite surface, d'un agent de régénération gazeux.

8. Procédé selon la revendication 7, dans lequel l'agent de régénération est un mélange d'air et d'ozone, d'azote et d'ozone ou d'oxygène et d'ozone.

9. Procédé selon la revendication 7, dans lequel l'agent de régénération est injecté au moyen d'un air-lift ou de rampes de bullage.

10. Procédé selon la revendication 7, dans lequel des gaz tels que de l'ozone excédentaire et du RuO$_4$ sortant de la solution aqueuse lors du procédé de dissolution, ils sont récupérés et soumis à un traitement de lavage au moyen d'une solution de lavage de ces gaz.

11. Procédé selon la revendication 10, dans lequel la solution de lavage des gaz est une solution aqueuse comprenant de 0,01 à 10 mol.l$^{-1}$ d'ions OH$^{-}$.

12. Procédé de décontamination de circuits d'une usine de retraitement de combustibles nucléaires, ledit procédé comprenant la mise en oeuvre d'un procédé selon l'une quelconque des revendications 1 à 11 précédentes.

## Claims

1. Process for dissolving ruthenium deposits that are present on a surface, comprising bringing said surface into contact with an aqueous solution of perruthenate, said aqueous solution having a pH equal to or greater than 12.

2. Process according to claim 1, in which said aqueous solution has a concentration C in mol.l$^{-1}$ of perruthenate, whereby $0 < C \leq 0.1$.

3. Process according to claim 1, in which said aqueous solution has a concentration C of $10^{-4}$ mol.l$^{-1}$.

4. Process according to claim 1 or 2, in which said aqueous solution has a concentration of OH$^-$ ions of between 0.01 and 6 mol.l$^{-1}$.

5. Process according to claim 1 or 2, in which said aqueous solution has a concentration of OH$^-$ ions of between 0.03 and 0.6 mol.l$^{-1}$.

6. Process according to claim 1 or 2, in which the contact is made at a temperature of between 5 and 50 °C.

7. Process according to claim 1, in which the perruthenate is regenerated in situ by injecting a gaseous regeneration agent into the aqueous solution that is in contact with said surface.

8. Process according to claim 7, in which the regeneration agent is a mixture of air and ozone, nitrogen and ozone or oxygen and ozone.

9. Process according to claim 7, in which the regeneration agent is injected using an air-lift or bubbling ramps.

10. Process according to claim 7, in which the gases such as excess ozone and $RuO_4$ that emanate from the aqueous solution during the dissolution process, are recovered and subjected to a scrubbing treatment using a scrubbing solution for these gases.

11. Process according to claim 10, in which the gas scrubbing solution is an aqueous solution comprising between 0.01 and 10 mol.l$^{-1}$ of OH$^-$ ions.

12. Process for decontaminating circuits in nuclear fuel reprocessing plants, in which said process comprises the implementation of a process according to any of preceding to 11.

**Patentansprüche**

1. Verfahren zum Lösen auf einer Oberfläche befindlicher Rutheniumablagerungen, das das In-Kontakt-Bringen der Oberfläche mit einer wässrigen Perruthenatlösung umfasst, wobei die wässrige Lösung einen pH von 12 oder darüber aufweist.

2. Verfahren gemäß Anspruch 1, bei dem die wässrige Lösung eine Perruthenatkonzentration C in mol.l$^{-1}$ aufweist, wobei $0 < C \leq 0,1$.

3. Verfahren gemäß Anspruch 1, bei dem die wässrige Lösung eine Perruthenatkonzentration C von $10^{-4}$ mol.l$^{-1}$ aufweist

4. Verfahren gemäß Anspruch 1 oder 2, bei dem die wässrige Lösung eine OH$^-$-Ionenkonzentration von 0,01 bis 6 mol.l$^{-1}$ aufweist.

5. Verfahren gemäß Anspruch 1 oder 2, bei dem die wässrige Lösung eine OH$^-$-Ionenkonzentration von 0,03 bis 0,6 mol.l$^{-1}$ aufweist.

6. Verfahren gemäß Anspruch 1 oder 2, bei dem das In-Kontakt-Bringen bei einer Temperatur von 5 bis 50 °C durchgeführt wird.

7. Verfahren gemäß Anspruch 1, bei dem das Perruthenat durch Einspritzen eines gasförmigen Regenerierungsmittels in die mit der Oberfläche in Kontakt befindliche wässrige Lösung in situ regeneriert wird.

8. Verfahren gemäß Anspruch 7, bei dem das Regenerationsmittel ein Gemisch aus Luft und Ozon, Stickstoff und Ozon oder Sauerstoff und Ozon ist.

9.  Verfahren gemäß Anspruch 7, bei dem das Regenerationsmittel mittels einer Blasensäule oder Blasenleiste eingespritzt wird.

10. Verfahren gemäß Anspruch 7, bei dem Gase wie etwa überschüssiges Ozon und $RuO_4$, die während des Lösungs-vorgangs aus der Lösung austreten, wiedergewonnen und einer Waschbehandlung mittels einer Waschlösung für diese Gase unterzogen werden.

11. Verfahren gemäß Anspruch 10, bei dem die Gaswaschlösung eine 0,01 bis 10 mol.l-1 OH-Ionen umfassende wässrige Lösung ist.

12. Verfahren zur Dekontaminierung von Schaltkreisen in Brennstoffwiederaufarbeitungsanlagen, wobei das Verfahren das Durchführen eines Verfahrens gemäß einem der vorangehenden Ansprüche 1 bis 11 umfasst.

**FIG. 1**

**FIG. 2**

FIG. 3

## RÉFÉRENCES CITÉES DANS LA DESCRIPTION

### Documents brevets cités dans la description

- EP 0247933 A
- JP 63243232 A
- US 5248496 A
- JP 10273327 A